# NOUVEAU FASCICULE DE BREVET EUROPEEN

(11) **EP 0 454 561 B2**
(45) Date de publication et mention de la décision concernant l'opposition: **23.07.1997**
(45) Mention de la délivrance du brevet: 14.09.1994
(21) Numéro de dépôt: 91401064.0
(22) Date de dépôt: 23.04.1991
(51) Int. Cl.: G01M 13/00, G01N 21/88

(54) **Dispositif permettant le contrôle de la continuité d'un cordon de colle formant joint**
Vorrichtung zum Kontrollieren der Kontinuität eines verbindungsabdichtenden Klebestranges
Apparatus for controlling the continuity of a joint-forming adhesive ribbon

(30) Priorité: 24.04.1990 FR 9005208
(43) Date de publication de la demande: 30.10.1991
(73) Titulaire: RENAULT AUTOMATION, 92109 Boulogne-Billancourt (FR)
(72) Inventeur: Thurier, Yvan, F-94320 Thiais (FR)
(74) Mandataire: Ernst-Schonberg, Michel

(56) Documents cités:
- EP-A- 0 124 188
- FR-A- 2 475 941
- GB-A- 2 054 197
- NL-A- 8 701 093
- US-A- 4 037 724
- US-A- 4 467 214
- US-A- 4 873 432
- US-A- 4 876 455

## Description

La présente invention concerne un dispositif de contrôle de la continuité d'un cordon de colle formant joint, ce type de joint étant utilisé pour assurer une étanchéité entre deux faces planes, par exemple entre deux carters d'un moteur à combustion interne.

Depuis plusieurs années, les joints en papier, insérés entre deux faces planes, ont été remplacés par des joints constitués d'un cordon d'un produit pâteux appelé aussi colle.

Il faut alors que ce cordon ne comporte aucune discontinuité, car cela provoquerait une fuite, par exemple une fuite d'huile pour un cordon installé entre les deux carters-moteur, ou une fuite d'eau pour un cordon installé entre le bloc-moteur et la pompe à eau.

Actuellement, les constructeurs utilisent ce type de joint lors du montage des moteurs et la continuité du joint est contrôlée, par vision, sur un dispositif spécifique constituant un poste supplémentaire placé en aval du poste de dépose du cordon.

Ce poste supplémentaire occupe une surface au sol non négligeable et il représente un investissement important.

Si le contrôle fait apparaître une discontinuité du cordon, le joint défectueux doit alors être refait manuellement.

On connaît toutefois, par le document GB-A-2054197, un système de détection embarqué avec une buse pour vérifier l'éventuelle présence d'un cordon de colle en avant de la buse et empêchant les surépaisseurs.

Le document EP-A-124188 divulgue quant à lui des moyens optiques disposés derrière une buse pour contrôler les dimensions géométriques du cordon déposé. Les moyens de détection et de commande de la buse décrits dans ces deux documents sont toutefois agencés de façon fixe par rapport à la buse, ce qui limite leur fonctionnement à des trajectoires essentiellement linéaires, que la buse soit fixe par rapport au bras manipulateur ou encore mobile en rotation comme dans le document FR-A-2475941 qui décrit des moyens de mise en rotation de la buse autour de son axe afin de reposer constamment sur la pièce à encoller placée sur un plateau tournant.

La présente invention a pour but d'améliorer les dispositifs de l'art antérieur. Elle permet en effet de supprimer le poste supplémentaire en assurant un contrôle de la continuité du cordon au niveau du poste de dépose et ce, grâce à des moyens de contrôle embarqués aptes à suivre tous les déplacements de la buse. Elle peut aussi permettre une retouche automatique du cordon, par un léger retour en arrière de la buse de dépose.

La présente invention a pour objet un dispositif de contrôle d'un cordon de colle formant joint, la colle étant délivrée à l'extrémité d'une buse.

Selon l'invention, ce dispositif de contrôle comporte une source d'émission lumineuse, une zone de détection située à proximité de la sortie de la buse, une cellule de réception lumineuse, et des moyens de transmission reliant la source d'émission à la zone de détection, et la zone de détection à la cellule de réception, le niveau de réflexion étant fonction de la continuité du cordon.

Selon une caractéristique de l'invention, ce dispositif permet une rotation de la zone de détection, afin de suivre un cordon à trajectoire courbe. A cet effet, le dispositif comporte un stator et un rotor portant la zone de détection et tournant autour d'un axe confondu avec celui de la buse.

Selon une autre caractéristique de l'invention, les moyens de transmission sont constitués de quatre réseaux de fibres optiques traversant le stator et le rotor, un joint tournant optique étant ainsi formé à la jonction stator/rotor.

Il est décrit ci-après, à titre d'exemple et en référence aux dessins annexés, un dispositif de contrôle selon l'invention.
La figure 1 est une vue en plan qui montre un cordon de colle à trajectoire courbe;
la figure 2 montre en coupe le dispositif de contrôle installé autour de la buse de dépose du cordon;
la figure 3 est une coupe du rotor du dispositif de contrôle selon III de la figure 2, montrant en demi-coupe le joint tournant et en demi-coupe la zone de détection.

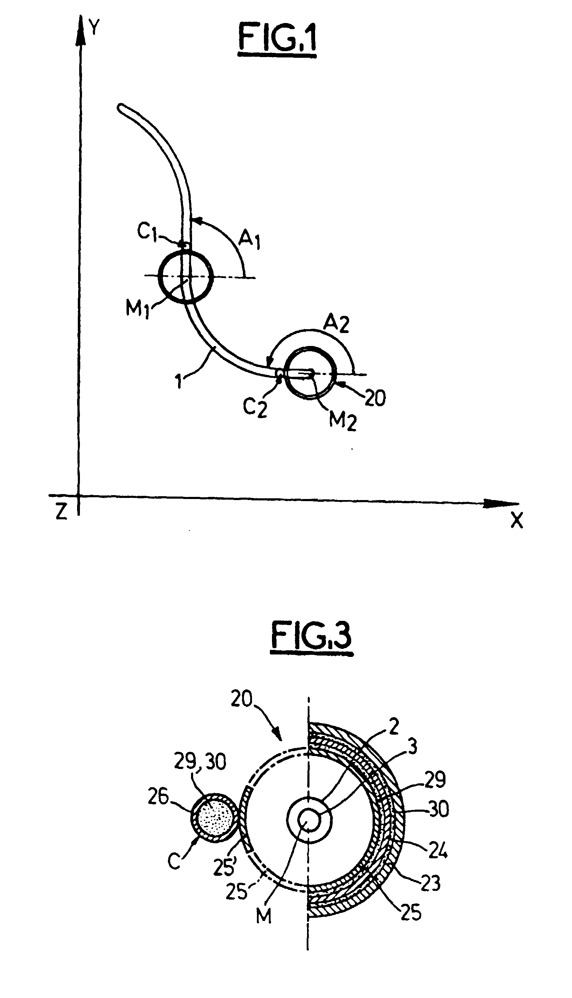

La figure 1 montre un cordon 1 situé dans un plan X,Y. La dépose du cordon s'effectue dans cette figure au point M2, le point M1 étant un point quelconque, intermédiaire, situé le long du cordon déposé.

Au point M2, la zone de détection C2 située à l'aplomb du cordon, présente un angle A2 de 180° par rapport à un repère parallèle à l'axe X. Au point M1, la zone de détection C1 située à l'aplomb du cordon, présente un angle A1 de 90°. Entre le point M1 et le point M2, le cordon a donc tourné de 90° et la zone de détection aussi, car cette zone de détection, montée sur un rotor 20 du dispositif de contrôle, suit le cordon en permanence.

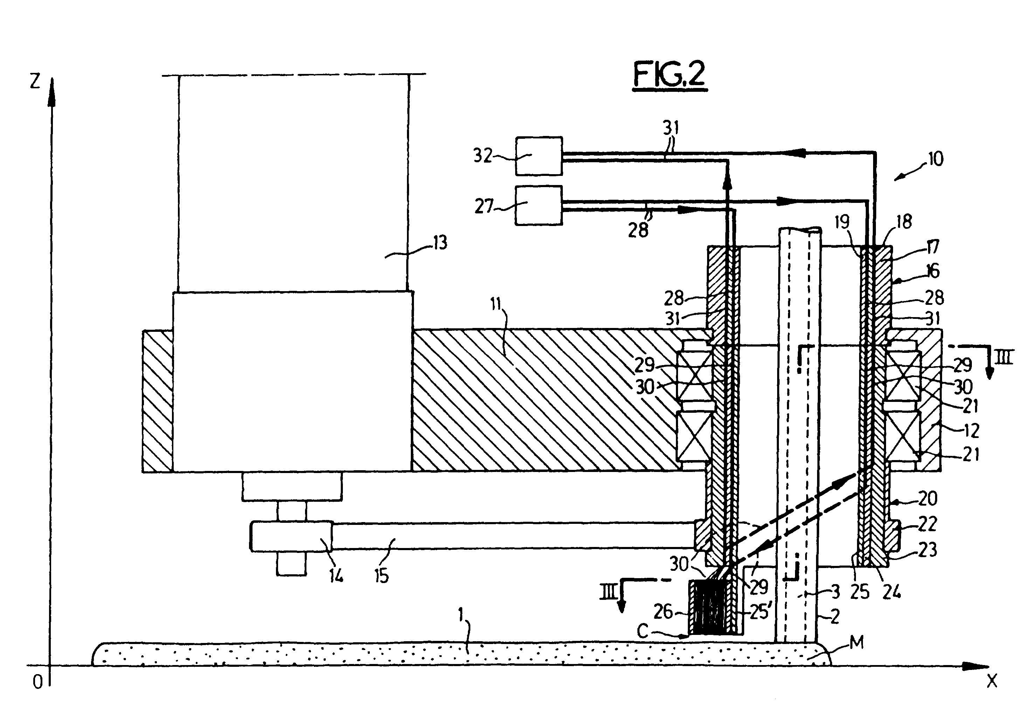

La figure 2 montre dans un plan X,Z, le cordon 1 déposé par la buse 2 à travers son orifice central 3, et le dispositif de contrôle 10.

Ce dispositif 10 comporte un bâti 11 terminé à une extrémité par un chapeau 12 maintenu par deux vis (non représentées), un micro motoréducteur 13 à l'extrémité duquel est montée une poulie 14, un stator 16 et un rotor 20 entraîné en rotation.

Le rotor 20 comporte une poulie 22 reliée à la poulie 14 du micro motoréducteur 13 par une courroie 15, le rotor tournant sur deux roulements à billes 21 solidaires du bâti 11.

Ce dispositif de contrôle comporte également une source démission lumineuse 27, une zone de détection C, une cellule de réception 32 et des moyens de transmission constitués de quatre réseaux de fibres optiques 28, 29, 30, 31, deux réseaux d'émission 28, 29 et deux réseaux de réception 30, 31.

Pour assurer la transmission entre stator et rotor, un joint optique tournant est constitué en assurant une répartition de toutes les fibres de chaque réseau sur toute la périphérie du stator et du rotor. Ce stator 16 est donc constitué de trois tubes concentriques 17, 18, 19 et le rotor 20 est également constitué de trois tubes concentriques 23, 24, 25.

Entre les tubes 19, 18 du stator, sont insérées, sur tout le pourtour, les fibres du réseau d'émission 28, et entre les tubes 18 et 17 du stator sont insérées, sur tout le pourtour, les fibres du réseau de réception 31. Entre les tubes 25, 24 du rotor, sont insérées, sur tout le pourtour, les fibres du réseau d'émission 29, et entre les tubes 24, 23 du rotor, sont insérées, sur tout le pourtour, les fibres du réseau de réception 30, comme cela est visible dans la demi-coupe de droite de la figure 3.

Les quatre réseaux de fibres sont noyés dans une résine qui rigidifie respectivement le stator d'une part et le rotor d'autre part.

La zone de détection C comporte un tube 26 bien visible sur la demi-coupe de gauche de la figure 3. Ce tube 26 est solidaire d'une prolongation 25' du tube interne 25 du rotor 20, et ce tube 26 renferme les deux réseaux de fibres 29 et 30. On comprend donc que les fibres des réseaux 28, 31 sont concentrées au niveau de la source 27 et de la cellule 32, puis elle s'expansent progressivement jusqu'à occuper toute la périphérie du joint tournant constituée à la jonction stator/rotor, tandis que les fibres des réseaux 29, 30 sont expansées sur toute la périphérie du joint tournant, puis elles se regroupent progressivement jusqu'à ce qu'elles remplissent l'intérieur du tube 26 de la zone de détection C.

Dans ce tube 26, les fibres d'émission et les fibres de réception peuvent être mélangées de façon aléatoire, ou rangées de façon uniforme et alternée afin d'assurer une meilleure réflexion.

Un tel dispositif de contrôle fonctionne de la manière suivante : la buse suit une trajectoire déterminée, programmée, et le dispositif de contrôle suit cette même trajectoire, car le bâti 11 du dispositif 20 est solidaire du bâti qui porte la buse.

Au début de l'opération de dépose du joint, la zone C est positionnée dans l'axe de déplacement de la buse pour contrôler immédiatement le cordon et, à chaque variation de trajectoire de la buse, la zone de détection sera immédiatement repositionnée dans l'axe de la nouvelle trajectoire par une rotation du rotor asservie à cette trajectoire. Le cordon sera ainsi contrôlé en permanence, et chaque discontinuité est immédiatement détectée. Un retouche manuelle est alors exécutée, ou mieux encore, une retouche automatique assurée par un léger recul de la buse.

## Revendications

1. Dispositif de dépôt d'un cordon (1) de colle formant joint comportant une buse de distribution (2) de la colle portée par un bâti apte à être déplacé suivant une trajectoire déterminée, caractérisé en ce qu'il comporte des moyens de contrôle optique (10) portés par ledit bâti est destinés à vérifier la continuité dudit cordon agencés de sorte que la zone de détection (C) soit située à proximité de la sortie de la buse et en ce que lesdits moyens de contrôle comprennent des moyens de mise en rotation de la zone de détection (C) afin de suivre un cordon à trajectoire courbe au moyen d'un rotor (20) portant la zone de détection (C) et tournant par rapport à la buse autour d'un axe confondu avec celui de la buse.

2. Dispositif selon la revendication 1, caractérisé en ce que les moyens de contrôle, comportent une source d'émission (17) lumineuse, une zone de détection (C), une cellule de réception (32) lumineuse et des moyens de transmission (28, 29, 30, 31) reliant la source d'émission à la zone de détection et la zone de détection à la cellule de réception, le niveau de réflexion étant fonction de la continuité du cordon.

3. Dispositif selon la revendication 2, caractérisé en ce que les moyens de transmission sont constitués de quatre réseaux (28, 29, 30, 31) de fibres optiques traversant un stator (16), porté de manière stationnaire par le bâti (11) et coaxial au rotor (20), et le rotor (20), un joint optique tournant étant ainsi formé à la jonction stator/rotor.

4. Dispositif selon la revendication 3, caractérisé en ce que le joint tournant est constitué de deux anneaux d'extrémité de fibres optiques au niveau du stator et de deux anneaux d'extrémité de fibres optiques au niveau du rotor, les anneaux intérieur et extérieur du stator étant respectivement en vis-à-vis des anneaux intérieur et extérieur du rotor .

5. Dispositif selon l'une des revendications précédentes, caractérisé en ce que le rotor est entraîné par un moteur (13) et par l'intermédiaire d'une courroie (15).

6. Dispositif selon l'une des revendications précédentes, caractérisé en ce que la trajectoire du bâti est modifiée en réponse aux discontinuités du cordon (1) détectées par lesdits moyens de contrôle (10).

## Patentansprüche

1. Vorrichtung zum Aufbringen eines eine Dichtung bildenden Klebstoffstranges (1) mittels einer Verteildüse (2) für den Klebstoff, die von einem Gehäuse getragen wird, welches entlang eines vorgegebenen Weges verschiebbar ist, dadurch gekennzeichnet, daß sie eine von diesem Gehäuse getragene optische Kontrollvorrichtung (10) aufweist, die dazu dient, die Kontinuität des Stranges zu überprüfen, wobei die Kontrollvorrichtung derart angeordnet ist, daß der Meßbereich (C) in der Nähe des Düsenauslasses liegt und daß die Kontrollvorrichtung eine Anordnung zum Verdrehen des Meßbereichs (C) aufweist, um einem gebogenen Strangverlauf mittels eines Rotors (20) zu folgen, wobei der Rotor (20) den Meßbereich trägt und sich in Bezug auf die Düse um eine Achse dreht, die mit derjenigen der Düse zusammenfällt.

2. Vorrichtung nach Anspruch 1, dadurch gekennzeichnet, daß die Kontrollvorrichtung eine lichtaussendende Quelle (27), einen Meßbereich (C), eine lichtempfangende Zelle (32) und eine Übertragungsanordnung (28, 29, 30, 31) aufweist, welche die Sendequelle mit dem Meßbereich sowie den Meßbereich mit der Empfangszelle verbindet, wobei das Maß der Reflexion eine Funktion der Kontinuität der Stranges ist.

3. Vorrichtung nach Anspruch 2, dadurch gekennzeichnet, daß die Übertragungsanordnung aus vier optischen Fasernetzen (28, 29, 30, 31) besteht, welche einen Stator (16), der vom Gehäuse unbeweglich und koaxial mit dem Rotor (20) getragen wird, und den Rotor (20) durchsetzen, wobei eine sich drehende optische Verbindung zwischen der Verbindung Stator/Rotor gebildet wird.

4. Vorrichtung nach Anspruch 3, dadurch gekennzeichnet, daß die sich drehende Verbindung aus zwei Endringen von optischen Fasern auf Höhe des Stators und zwei Endringen aus optischen Fasern auf Höhe des Rotors besteht, wobei der innere Ring und der äußere Ring des Stators gegenüber dem entsprechenden inneren bzw. äußeren Ring des Rotors angeordnet sind.

5. Vorrichtung nach einem der vorhergehenden Ansprüche, dadurch gekennzeichnet, daß der Rotor von einem Motor (13) über einen Keilriemen (15) angetrieben ist.

6. Vorrichtung nach einem der vorhergehenden Ansprüche, dadurch gekennzeichnet, daß der Weg des Gehäuses als Folge von Unregelmäßigkeiten des Stranges (1) verändert wird, die durch die Kontrollvorrichtung (10) festgestellt werden.

## Claims

1. Apparatus for depositing a line (1) of glue forming a joint comprising a nozzle (2) for distribution of the glue which is carried by a frame structure capable of being displaced along a given path characterised in that it comprises optical monitoring means (10) which are carried by said frame structure and which are intended to verify the continuity of said line of glue and so arranged that the detection zone (C) is disposed in the vicinity of the outlet of the nozzle, and that said monitoring means comprise means for rotating the detection zone (C) in order to follow a line of glue having a curved path by means of a rotor (20) carrying the detection zone (C) and rotating with respect to the nozzle about an axis which is coincident with that of the nozzle.

2. Apparatus according to claim 1 characterised in that the monitoring means comprise a light emission source (27), a detection zone (C), a light receiving cell (32) and transmission means (28, 29, 30, 31) connecting the emission source to the detection zone and the detection zone to the receiving cell, the level of reflection being dependent on the continuity of the line of glue.

3. Apparatus according to claim 2 characterised in that the transmission means are formed by four systems (28, 29, 30, 31) of optical fibres which pass through a stator (16) stationarily carried by the frame structure (11) and coaxial with the rotor (20), and the rotor (20), a rotary optical joint being thus formed at the stator/rotor junction.

4. Apparatus according to claim 3 characterised in that the rotary joint is formed by two end rings of optical fibres at the location of the stator and two end rings of optical fibres at the location of the rotor, the inner and outer rings of the stator being respectively disposed facing the inner and outer rings of the rotor.

5. Apparatus according to one of the preceding claims characterised in that the rotor is driven by a motor (13) and by way of a belt (15).

6. Apparatus according to one of the preceding claims characterised in that the path of movement of the frame structure is modified in response to the discontinuities in the line (1) of glue, which are detected by said monitoring means (10).
